# EUROPEAN PATENT APPLICATION

(11) **EP 0 585 506 A1**
(43) Date of publication of application: **09.03.1994**
(21) Application number: 92830462.5
(22) Date of filing: 31.08.1992
(51) Int. Cl.: G09B 29/00, G09B 29/02, G09B 29/10

(54) **Easy read-out topographic map**

(71) Applicant: Marzari, Roberto Antonio, I-20052 Monza (Milano) (IT)
(72) Inventor: Marzari, Roberto Antonio, I-20052 Monza (Milano) (IT)
(74) Representative: Cicogna, Franco

(57) **Abstract**

The present invention relates to an easy read-out topographic map, which comprises a supporting plate-like element bearing a topographic representation,on a reduced scale, about a preset geographic area or region.

On a portion of the plate-like element there are superimposed a plurality of elements each of which bears an enlarged-scale topographic representation of a portion of the geographic area or region shown on the plate-like element, each element of the plurality being adapted to be individually selected in order to display its related portion of the grographic area or region.

## Description

### BACKGROUND OF THE INVENTION

The present invention relates to an easy read-out topographic map.

There are already known several types of topographic maps which display geographic areas or regions, such as, for example, the plan of a town, of a region, a country, a Continent and so on.

These topographic maps are usually made with different scales, depending on the definition degree to be obtained.

A very diffused configuration of these prior maps is that in which, on a single map sheet, which is adapted to be suitably folded, there is represented, on a set scale, the desired geographic area.

This embodiment provides an overall outline of the geographic region, but the map is difficult to read, mainly on a car, since the map sheet is difficult to spread, because of its comparatively large size, thereby the driver is compelled to stop the car in order to read-out the map.

Other approaches solve the problem of the large size of the map, by practically providing a map book, which includes, at the start thereof, the so-called joining frame, on which there is represented, on a very reduced scale, the geographic region covered by the map and which indicates the pages thereon the several geographic partial regions are represented on an enlarged scale.

This embodiment has the drawback that it requires a rather difficult search of the desired page and, moreover, the user can not immediately and easily access the overall display of the geographic region.

### SUMMARY OF THE INVENTION

Accordingly, the aim of the present invention is to ovecome the above mentioned drawbacks, by providing an easy read-out topographic map, which allows the user to always easily access the map joining frame on which there is represented, on a reduced scale, the desired geographic region, as well as the single elements showing, on an enlarged scale, the several portions of the joining frame.

Within the scope of the above mentioned aim, a main object of the present invention is to provide such a topographic map which can be easily read-out by a driver, or a generical user, without obstructing the read-out operations and without diverting the driver from the car drive.

Another object of the present invention is to provide such a topographic map which can be directly and easily applied on a motor vehicle, so as to immediately provide the user with a display of a road to be followed.

Another object of the present invention is to provide such a topographic map which has a very reduced size, while providing the user with all of the required geographic information.

Yet another object of the present invention, moreover, is to provide such a topographic map which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by an easy read-out topographic map, characterized in that said topographic map comprises a supporting plate-like element, bearing a reduced scale topographic representation of a preset geographic area or region, on a portion of said plate-like element there being superimposed a plurality of elements each of which bears an enlarged scale topographic representation of a portion of the geographic area or region shown on the plate-like element, said elements of said plurality being adapted to be individually selected in order to display a desired portion of said geographic area or region.

### BRIEF DESCRIPTION OF THE DRAWINGS

Further characteristics and advantages of the present invention will become more apparent from the following detailed disclosure of an easy read-out topographic map, according to the invention, which is illustrated, by way of an indicative, but not limitative, example, in the figures of the accompanying drawings, where:

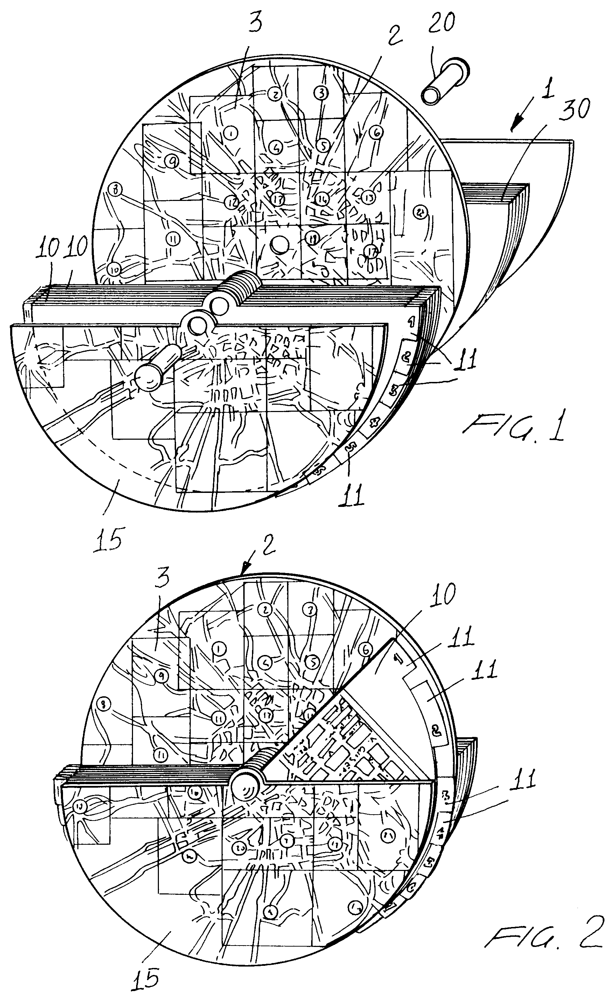

Figure 1 is an exploded perspective view illustrating the topographic map according to the present invention;
Figure 2 is a further prospective view of the topographic map according to the ivnention;

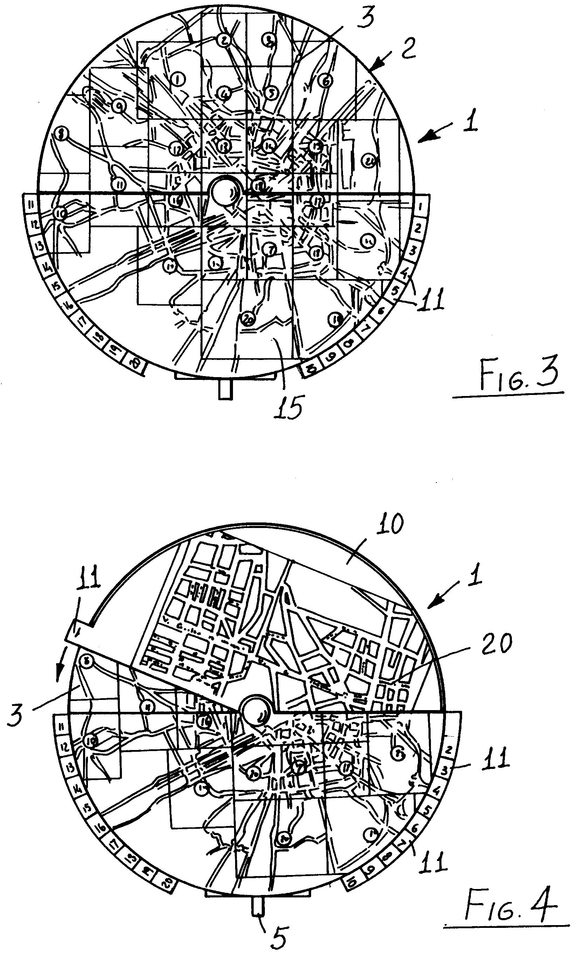

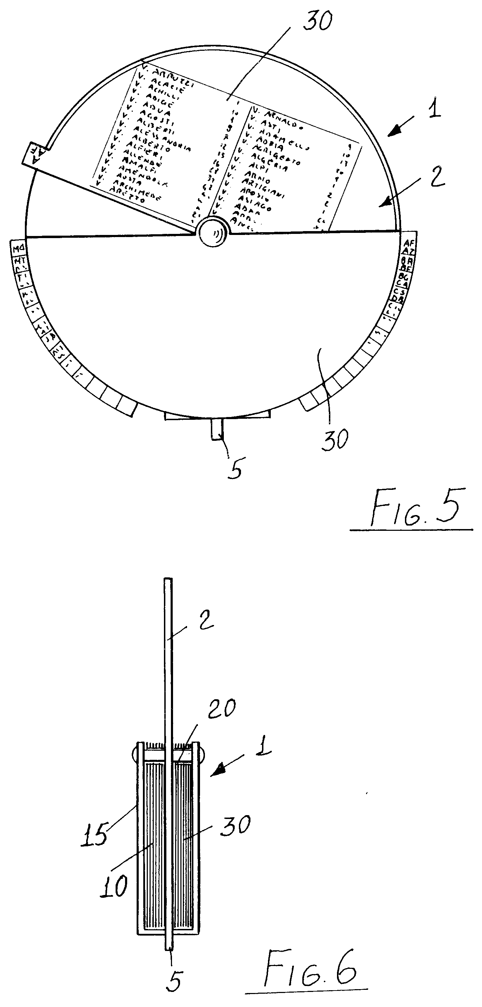

Figure 3 is a front view of the topographic map according to the invention, in which there is clearly shown a reduced scale topographic representation or display;
Figure 4 shows the subject topographic map therefrom an element has been removed, said element bearing an enlarged scale geographic or topographic representation;
Figure 5 illustrates the rear portion of the topographic map according to the invention, where is advantageously provided an alphabetic indication of the several regions, and related elements in which the geographic regions are represented;
   and
Figure 6 is an elevation view illustrating the subject topographic map.

### DESCRIPTION OF THE PREFERRED EMBODIMENT

With reference to the figures of the accompanying drawings, the easy read-out topographic map according to the present invention, which has been generally indicated at the reference number 1, comprises a supporting plate-like element 2, which is made of a preferably rigid material and defines a substantially circular configuration.

On a surface of the supporting element 2 there is provided a reduced scale topographic representation or display 3, which shows a preset geographic area or region.

The plate-like element 2, moreover, is provided with a lug 5 allowing the topographic map to be applied to a fixed support, in order to facilitate the read-out of the map.

On the plate-like element 2, as shown, there are superimposed a plurality of elements 10, having a substantially semicircular configuration, and which are swingable about a central collecting pivot-pin 20, passing through the center of the plate-like element 2.

More specifically, the elements 10 are provided on their periphery with a lug arrangement 11 with marking members adapted to define the correspondence between the enlarged scale topographic region, as provided on the elements, and the same region reproduced on a reduced scale, and provided on the plate-like element 2.

A front element 15 is moreover provided reproducing the reduced scale topographic representation and which practically completes the display or representation provided on the plate-like element 2, so that the user can always clearly see the full geographic area or region represented on the map according to the invention.

On the rear surface of the plate-like element 2 there are advantageously superimposed index elements, indicated at 30, which are provided with a stepped perimetrical arrangement 31 where there are indicated the several alphabetical correspondences of the localities or roads reproduced on the map.

By using the above disclosed topographic map, the user can always control the general joining frame representing the overall geographic area or region covered by the map and he can locate the number or mark member corresponding to a given region, which is represented on an enlarged scale on one of the elements 10, which can be simply displayed by causing it to simply rotate about the pivot pin 20 and withdrawing it, successively, from the other elements 10, so as to obtain en enlarged scale display of the desired region.

From the above disclosure it should be apparent that the topographic map according to the invention is very advantageous since, while having a very reduced size, it allows the user to easily access reduced scale displays as well as enlarged scale displays facilitating the drive to desired regions and the locating of a preset locality, by using a corresponding element 10 on which the region is represented on an enlarged scale.

The invention as disclosed is susceptible to several modifications and variations all of which will come within the scope of the inventive idea.

Moreover, all the constructional details can be replaced by other technically equivalent elements.

In practicing the invention, the used materials, as well as the contingent size and shapes can be any, depending on requirements.

## Claims

1. An easy read-out topographic map, characterized in that said map comprises a supporting plate-like element, bearing a reduced scale topographic representation or a preset geographic area or region, on a portion of said plate-like element there being superimposed a plurality of elements each of which bears an enlarged scale topographic representation of a portion of the geographic area or region represented on said plate-like element, said elements of said plurality being adapted to be individually selected in order to display the geographic area or region represented thereon.

2. A topographic map according to Claim 1, characterized in that said plate-like element is made of a substantially rigid material and has a substantially circular configuration.

3. A geographic map according to Claims 1 and 2, characterized in that said plate-like element has a radially projecting lug for connecting with a fixed support.

4. A topographic map according to one or more of the preceding claims, characterized in that said elements of said plurality have a substantially semicircular configuration and are rotatably connected to a pivot pin arranged at the center of said plate-like element and connected to said plate-like element.

5. A topographic map according to one or more of the preceding claims, characterized in that said elements of said plurality are provided, on the peripheral portion thereof, with lug marks in order to define the correspondence with the regions represented on the reduced scale topographic representation or display.

6. A topographic map according to one or more of the preceding claims, characterized in that said map further comprises a front element adapted to complete the reduced scale topographic display arranged on the plate-like element.

7. A topographic map according to one or more of the preceding claims, characterized in that said map further comprises, on the other surface of said plate-like element, index elements for indexing the localities or roads or regions provided on said topographic map, according to an alphabetic order, said index marks being provided with perimetrical stepped regions.
